# EUROPEAN PATENT APPLICATION

(11) **EP 1 954 050 A2**
(43) Date of publication of application: **06.08.2008**
(21) Application number: 07111684.2
(22) Date of filing: 03.07.2007
(51) Int. Cl.: H04N 7/173

(54) **An interactive audio-video displaying system and method thereof**

(30) Priority: 07.11.2006 US 593761
(71) Applicant: IF-OK Inc. (Samoa), Apia, Samoa (WS)
(72) Inventor: Shen, Liyu, Santa Ana, California 92707 (US)
(74) Representative: Viering, Jentschura & Partner

(57) **Abstract**

The present invention provides an interactive audio-video displaying system and a method thereof for displaying the movie clips with a plurality of marks thereon. The present invention utilizes the sound, an object start to move or the changes of movement directions of a moving object to produce the acting signals, or a computer can generate the acting signals itself, for controlling the display of the images between the marks of the movie clips incorporated with the sound effect; or the images between the marks of the movie clips are displayed with the sound effect according to the calculated quantity of the acting signals produced in a time unit, to increase the reality of the image display. Marks are provided on the movie clip to indicate the movements or the exercising frequencies or the directions of the movements. The present invention provides a method and a system that can make the user directly interact with the visual images in the video screen by lower cost and is more convenient to operate.

## Description

### FIELD OF THE INVENTION

The present invention relates to an interactive audio-video displaying system and a method thereof, more particularly, to a system and a method which can provide a changing visual image and various aspects of the audio-video displaying system are controlled by the user with lower cost and is more convenient to operate.

### BACKGROUND OF THE INVENTION

The conventional method of interacting between the user and the audio-video displaying system is to receive the input signals from users, and through a complicated calculation of the trajectory, the light and the space, the animation is then produced, as a result, the user can control the functions of the motion display. The benefit of having the ability to control the animation is that the movement frequency, the movement direction and the movement intensity of the user can all be properly controlled and presented. On the contrary, the video displaying image is difficult to control and achieve a perfect state, and the reality image provided by the video is impossible to be replaced by the animation skill, and the needs of expensive computer equipments and software for producing the animation is another shortcoming.

U.S. Patent number 6428449 discloses an interactive system according to the user's movement and acoustic orders, wherein the disclosed system utilizes the combinations of the repeated body movement and the acoustic orders to control the changes of the display image, the repeated body movement controls the rhythm of the display motion and the acoustic orders command a plurality of virtual movements. Therefore, a user can create a lot of sets of virtual motions such as, shooting, swimming, standing, turning, sliding, walking and running etc., each movement is determined by the acoustic orders and the rhythm of the display motion is according to the repeated body movement of the user. Although, the acoustic orders can control simple movement such as, fetch something or deliver a particular good to a certain place. The disclosed method in 6428449 can only be used to command various behaviors in a virtual world, further, according to current technology, the virtual conditions created by the computer software are incomparable to the real video scenes. Moreover, those computer software are extremely expensive, a high-tech hard drive is required to incorporate with such software, the cost of the whole set of game is normally unaffordable to the general public.

U.S. Patent number 6750865 discloses a video simulating device in which it records a plurality of the video clips in various circumstantial conditions, then the video clips are computerized according to various parameters which are inputted by a user to determine which video clips should be played. For example, filming the fishing video clips in different seasons at different spots, then through the inputted parameters to analyze and determine which scenes of the video clips should be played. Although the video device disclosed in 6750865 can be applied in a game, the video clip can be chosen at different stages for the interaction between the user and the game, the prior art is limited to the conventional video game because the user can not control the video clips fully, he or she can only observe the game but not to command it. Therefore, the disclosed video simulating device provides restricted interactive functions between the user and the game.

Consequently, it is an objective of the present invention to provide an interactive audio-video displaying system and a method in which a changing visual image and various aspects of the audio-video displaying system are controlled by the user.

### SUMMARY OF THE INVENTION

Therefore, the objective of the present invention is to overcome and resolve the above-mentioned problems, including the current technical problems in the prior art.

The primary objective of the present invention is to disclose an interactive audio-video displaying system and method. The system of the present invention can produce acting signals based on the sound signal made by the user. The acting signal can also be produced by detecting the motion of the user such as starting of movement and change in movement direction by using a detecting device (detector). In addition, a computer can also produce the acting signal, which can then be used for controlling the display of a movie clip, and during the display, the system will play user's sound and speech or sound effects chosen by the user in order to make users feel they are one of the characters in the displaying movie clip.

The interactive audio-video displaying system in accordance with a preferred example of the present invention comprises a video displaying device for displaying video data, a data storage device having at least one movie clip comprising a plurality of marks. The system further comprises an acting signal producing unit for producing and transmitting the acting signals, and a control device for moving a mark pointer according to the acting signal produced by the acting signal producing unit, the corresponding video data of the movie clip in respect to the position of the mark pointer is transmitted to the video displaying device to display.

The interactive audio-video displaying system also comprises an audio player and an audio data producing unit, the audio data producing unit produces an audio data and transmits it to the audio player for delivering, and the acting signal producing unit is replaced by the audio data producing unit, wherein every audio data results in an acting signal. An audio-video data synthesizing device for synthesizing the video data transmitted to the video displaying device and the audio data transmitted to the audio player, then exporting the synthesized data to become a new movie clip. At least one sound effect is prerecorded and stored in the data storage device, and the control device retrieves at least one sound effect that is prerecorded and stored in the data storage device in order to replace the audio data producing unit.

The acting signal producing unit further comprises a detecting device for detecting any variation of a movement direction of a moving object, when the detecting device detects a starting point of the movement and a turning point of the changing movement direction of the moving object, an acting signal is produced. The detecting device further comprises a functional key, when the functional key is triggered, the mark pointer is moved to a next mark of the movie clip. The acting signal producing unit utilizes a microphone to receive a sound signal, wherein the sound signal results in an acting signal. The acting signal producing unit delivers a sound signal, wherein the sound signal results in an acting signal. The acting signal producing unit utilizes a video camera to receive image signals of a moving body by recording movements of the moving body, and through analyzing, the acting signals are produced according to the retrieved image signals.

The acting signal producing unit, the audio data producing unit, the control device, the data storage device, the audio player, the video displaying device and the audio-video data synthesizing device communicate via a wire, wireless, network, or internet connection.

It is another object of the present invention to provide an interactive audio-video displaying method in accordance with another preferred example, comprising:
(a) producing a movie clip with a plurality of marks;
(b) setting a mark pointer on one of the marks located on the movie clip;
(c) receiving an acting signal;
(d) moving the mark pointer from a current position towards an ending part of the movie clip, and transmitting corresponding video data of the movie clip in respect to the position of the mark pointer to a video displaying device to display during the moving, and when the mark pointer is moved through a first quantity of marks, and reach end of the first quantity of marks, the mark pointer is stopped and the step (c) is repeated, wherein when the acting signal is received during the moving in the step (d), the mark pointer is moved to next mark and the step (d) is repeated.

The method further comprises of relocating the mark pointer to the first mark of the movie clip when the mark pointer arrives the ending part of the movie clip, and the method continues to proceed. The method also includes to retrieving an audio data when the mark pointer reaches one of the marks, and transmitting the audio data to an audio player for delivering. Equipping a detecting device onto an user, when the user starts to move, the detecting device detects starting point of the movement and detects turning point of the changing movement direction of the user, and in response of the detection, the acting signals are produced.

It is another object of the present invention to provide an interactive audio-video displaying method in accordance with another preferred example, comprising:
(a) producing a movie clip with a plurality of marks thereon;
(b) setting a mark pointer on one of the marks located on the movie clip, setting a counter, and repeating following step;
(c) calculating a second quantity according to the value stored in the counter, retrieving a predetermined time unit, and proceeding the following steps within the predetermined time unit:
   (c1) moving the mark pointer from a current position towards an ending part of the movie clip, the mark pointer will stop moving whenever passing through the second quantity of marks, transmitting corresponding video data of the movie clip in respect to the position of the mark pointer to a video displaying device to display either normally, or fast-forwardly, or slowly in such that the display will be performed exactly within the predetermined time unit; and
   (c2) receiving a first quantity of acting signals, and saving value of such first quantity in the counter.

The step (b) further comprises of setting a zero value in the counter. The method further comprises of relocating the mark pointer to the first mark of the movie clip when the mark pointer arrives the ending part of the movie clip, and the method continues to proceed. The method also includes to retrieving an audio data when the mark pointer reaches one of the marks, and transmitting the audio data to an audio player for delivering. Equipping a detecting device onto an user, when the user starts to move, the detecting device detects starting point of the movement and detects turning point of the changing movement direction of the user, and in response of the detection, the acting signals are produced.

According to another preferred example of the present invention, an interactive audio-video displaying method comprises of:
(a) producing a movie clip having a plurality of movie segments, wherein each movie segment comprises a plurality of marks and is corresponding to different exercising frequency, and each of the movie segments has same video time duration;
(b) setting a counter and executing steps (c), (c1),and (c2) repeatedly;
(c) calculating a second quantity according to the value stored in the counter; selecting a movie segment with corresponding exercising frequency in accordance with the second quantity; retrieving a predetermined time unit that is equal to the video time duration of each movie segment, and proceeding the following steps within the predetermined time unit;
   (c1) retrieving video data of the movie segment and displaying the video data with normal speed; and
   (c2) receiving a first quantity of acting signals, and saving value of such first quantity in the counter.

The step (b) further comprises of setting a zero value in the counter. The method further comprises of retrieving an audio data when the mark pointer reaches one of the marks, and transmitting the audio data to an audio player for delivering. The method also includes to equipping a detecting device onto an user, when the user starts to move, the detecting device detects starting point of the movement and detects turning point of the changing movement direction of the user, and in response of the detection, the acting signals are produced.

The present invention further provides an interactive audio-video displaying method, according to another preferred example, comprising:
(a) producing a movie clip with a plurality of marks thereon;
(b) setting a mark pointer on one of the marks located on the movie clip, receiving an acting signal, setting a time interval counter; and repeating following steps;
(c) calculating time interval between the acting signal and previous acting signal, and storing the time interval in the time interval counter; and
(d) retrieving the time interval from the time interval counter, moving the mark pointer from a current position towards an ending part of the movie clip,
wherein when the mark pointer reaches the next mark, it will stop, and transmitting corresponding video data of the movie clip in respect to the position of the mark pointer to a video displaying device to display either normally, or fast-forwardly, or slowly in such that the display will be performed exactly within the time interval.

The method further comprises of relocating the mark pointer to the first mark of the movie clip when the mark pointer arrives the ending part of the movie clip, and the method continues to proceed. The method also includes to retrieving an audio data when the mark pointer reaches one of the marks, and transmitting the audio data to an audio player for delivering. Equipping a detecting device onto an user, when the user starts to move, the detecting device detects starting point of the movement and detects turning point of the changing movement direction of the user, and in response of the detection, the acting signals are produced.

The present invention further provides an interactive audio-video displaying method, according to another preferred example, comprising:
(a) producing a movie clip with a plurality of marks thereon;
(b) setting a mark pointer on one of the marks located on the movie clip, receiving a plurality of acting signals, producing an acting signal time code record, and repeating the following steps:
(c) calculating time interval between each acting signal and its preceding acting signal;
(d) moving the mark pointer from a current position towards an ending part of the movie clip, wherein when the mark pointer reaches the next mark, it will stop, and transmitting corresponding video data of the movie clip in respect to the position of the mark pointer to a video displaying device to display either normally, or fast-forwardly, or normally to the midpoint then pause then normally in such that the display will be performed exactly within the time interval.

Transmitting corresponding video data of the movie clip in respect to the position of the mark pointer to a video displaying device to display, simultaneously, exporting the prerecorded sound track to an audio player for delivering. The method further comprises of relocating the mark pointer to the first mark of the movie clip when the mark pointer arrives the ending part of the movie clip, and the method continues to proceed. Retrieving an audio data when the mark pointer reaches one of the marks, and transmitting the audio data to an audio player for delivering. Equipping a detecting device onto an user, when the user starts to move, the detecting device detects starting point of the movement and detects turning point of the changing movement direction of the user, and in response of the detection, the acting signals are produced. The method also includes to prerecording a sound track by a user, every sound signal results in an acting signal and is recorded in the acting signal time code record. The user prerecords the sound track via a wire, wireless, network, or internet connection.

Both the forgoing general description and the following detailed description are exemplary and explanatory only and are not restrictive of the invention, as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic diagram demonstrating an interactive audio-video displaying system in accordance with a preferred embodiment of the present invention;
FIG. 2 is a schematic diagram demonstrating an interactive audio-video displaying method in accordance with a preferred embodiment of the present invention;
FIG. 3 is a schematic diagram demonstrating an interactive audio-video displaying method in accordance with another preferred embodiment of the present invention;
FIG. 4 is a schematic diagram demonstrating an interactive audio-video displaying method in accordance with the third preferred embodiment of the present invention;
FIG. 5 is a schematic diagram demonstrating an interactive audio-video displaying method in accordance with the fourth preferred embodiment of the present invention;
FIG. 6 is a schematic diagram demonstrating an interactive audio-video displaying method in accordance with the fifth preferred embodiment of the present invention;
FIG. 7 is a schematic diagram demonstrating a method of an interactive audio-video displaying system in accordance with a preferred embodiment of the present invention;
FIG. 8 is a schematic diagram demonstrating the method of an interactive audio-video displaying system in accordance with another preferred embodiment of the present invention.
FIG. 9 is a schematic diagram demonstrating the method of an interactive audio-video displaying system in accordance with another preferred embodiment of the present invention.
FIG. 10 is a schematic diagram demonstrating the method of an interactive audio-video displaying system in accordance with another preferred embodiment of the present invention.
FIG. 11 is a schematic diagram demonstrating the method of an interactive audio-video displaying system in accordance with another preferred embodiment of the present invention.

### DETAILED DESCRIPTION OF PREFERRED EMBODIMENTS

Now, preferred embodiments of the present invention will be described in detail with reference to the accompanying drawings. It should be noted, however, that the scope of the present invention is not limited by the illustrated embodiments.

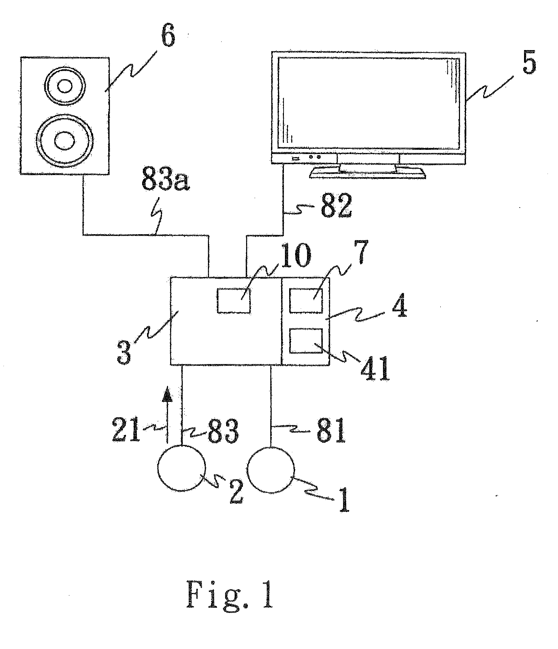

FIG. 1 is a diagram illustrating an interactive audio-video displaying system and a method according to a preferred embodiment of the present invention. This preferred embodiment of the present invention discloses a method for controlling the pre-determined data of the movie clip 7 which is stored in the data storage device 4 to be retrieved and transmitted to a video displaying device 5 for displaying by means of user's sound and speech, the detected movements of the user or command of the computer. Simultaneously, the audio data 21 produced by user's sound and speech, the audio data 41 prerecorded and stored in the data storage device 4, or the audio data 21 produced by the computer is transmitted to the audio player 6 for delivering. A plurality of marks are set on the movie clip 7. An acting signal producing unit 1 produces acting signals and the acting signals are transmitted to the control device 3 through transmission path 81, wherein the control device 3 retrieves partial video data from the movie clip 7 in accordance with the received acting signals, the retrieved video data is transmitted to the video displaying device 5 through the transmission path 82 to display. The audio data producing unit 2 produces and transmits the audio data 21 to the audio player 6 for delivering through the transmission path 83 and transmission path 83a. The functions of the audio data producing unit 2 can be replaced by combining the control device 3 and the data storage device 4 in such that the control device 3 retrieves the audio data 41 prerecorded in the data storage device 4 and transmits it to the audio player 6 for delivering through the transmission path 83a when the mark pointer arrives at each mark. An audio-video data synthesizing device 10 for synthesizing the video data transmitted to the video displaying device 5 and the audio data transmitted to the audio player 6, then exporting the synthesized data to become a new movie clip. Furthermore, the acting signal producing unit 1 can produce the acting signals via various methods, such as, utilizing a video camera to receive the image signals of a moving object, through analyzing, the acting signals are produced according to the retrieved image signals.

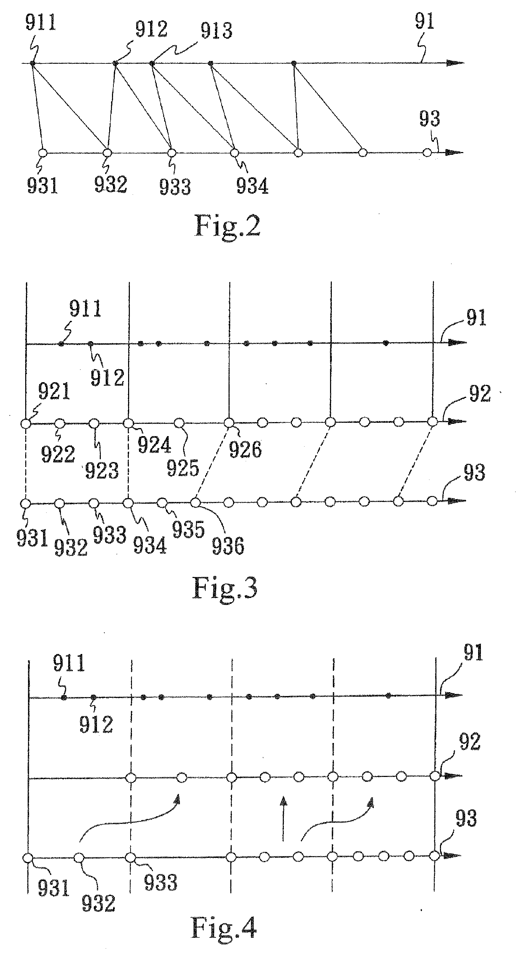

FIG. 2, FIG. 3, FIG. 4, FIG. 5 and FIG. 6 are five different displaying methods of the movie clip controlled by the received acting signals respectively.

Refer to FIG. 1 and FIG. 2, wherein FIG. 2 is a schematic diagram demonstrating an interactive audio-video displaying method in accordance with another preferred embodiment of the present invention. An acting signal timeline 91 represents the acting signals are produced by the acting signal producing unit 1 according to the proceeding time direction, a movie clip timeline 93 represents the displaying of the movie clip 7 in normal speed, and arrow signs are utilized to represent the proceeding time direction of the acting signal timeline 91 and the movie clip timeline 93 when the system starts to operate. At first, the movie clip 7 with a plurality of marks is produced, wherein those marks are presented with hollow circles on the movie clip timeline 93, further detail descriptions will be disclosed in the following preferred embodiments. Acting signal 911, acting signal 912 and acting signal 913 are presented on the acting signal timeline 91 according to the proceeding time direction. Mark 931, mark 932 and mark 933 are presented on the movie clip timeline 93 according to the proceeding time direction. Refer to FIG. 2, when the system starts to operate, a mark pointer is set at one of the marks located on the movie clip 7, the first mark (mark 931) on the movie clip 7 is chosen in this preferred example. Set a ratio between the number of received acting signals and the first quantity of marks which the mark pointer will pass through. The ratio is set to be 1:1 in this preferred example, i.e. when the control device 3 receives each acting signal, the mark pointer will move from the current position toward the ending part of the movie clip 7 and pass through one mark (other ratios can also be utilized). The acting signals produced by the acting signal producing unit 1 are transmitted to the control device 3 through the transmission path 81, the control device 3 will control the mark pointer by moving it from the current position, such as the mark 931, toward the ending part of the movie clip 7 immediately after receiving the acting signal 911. Simultaneously, video data of the corresponding movie clip 7 indicated by the mark pointer is transmitted to the video displaying device 5 through the transmission path 82 to display. When the mark pointer moves to next predetermined mark (such as, the mark 932), it will stop moving and the control device 3 will simultaneously stop outputting images, and wait for receiving next acting signal. Until the acting signal 912 is received by the control device 3, the system will repeat its proceeding steps as mentioned above. If the control device 3 receives the acting signal 913 while the mark pointer is still moving, the control device 3 would control the mark pointer to jump to the next following mark (mark 933) and repeat the above-mentioned proceeding steps. If the mark pointer arrives at the ending part of the movie clip 7, the mark pointer would be relocated at the first mark (which is the mark 931) of the movie clip 7. The audio data producing unit 2 produces and transmits the audio data 21 to the audio player 6 for delivering through the transmission path 83 and transmission path 83a. The functions of the audio data producing unit 2 can be replaced by combining the control device 3 and the data storage device 4 in such that the control device 3 retrieves the audio data 41 prerecorded in the data storage device 4 and transmits it to the audio player 6 for delivering through the transmission path 83a when the mark pointer arrives at each mark. An audio-video data synthesizing device 10 for synthesizing the video data transmitted to the video displaying device 5 and the audio data transmitted to the audio player 6, then exporting the synthesized data to become a new movie clip.

Refer to FIG. 1 and FIG. 3, wherein FIG. 3 is a schematic diagram demonstrating an interactive audio-video displaying method in accordance with another preferred embodiment of the present invention. An ultimate difference between FIG. 2 and FIG. 3 is the displaying timeline 92 which represents the real displaying time of the movie clip. At first, the movie clip 7 with a plurality of marks is produced, wherein those marks are presented with hollow circles on the movie clip timeline 93. The displaying mark 921 to the displaying mark 926 are presented on the displaying timeline 92 according to the proceeding time direction. When a segment of movie clip timeline 93 is equal to a corresponding segment of the displaying timeline 92, it indicates that the movie clip is displayed within the same timeframe, in other words, the displaying of the movie clip is performed in normal speed. When a segment of the displaying timeline 92 is longer than the corresponding segment of the movie clip timeline 93, it represents that it takes more time to display such segment of the movie clip, the displaying is performed slowly. When a segment of the displaying timeline 92 is shorter than the corresponding segment of the movie clip timeline 93, it indicates that less time is used to display the movie clip, the displaying is performed fast-forwardly.

Refer to FIG. 3, when the system starts to operate, a mark pointer is set at one of the marks located on the movie clip 7, Tthe first mark (mark 931) on the movie clip 7 is chosen in this preferred example, a counter and a ratio are set and the value stored in the counter is set to be a predetermined quantity, then every predetermined time unit is retrieved according to the orders of the displaying time periods, and the following steps are operated within every predetermined time unit, such as: a second quantity is calculated from the value stored in the counter according to the predetermined ratio; the mark pointer will move from the current position toward the ending part of the movie clip 7, and the mark pointer will stop moving whenever passing through the second quantity of marks. Simultaneously, video data of the corresponding movie clip 7 indicated by the mark pointer is transmitted to the video displaying device 5 through the transmission path 82 to display either normally, or fast-forwardly, or slowly in such that the displaying will be totally performed exactly within the predetermined time unit. During the displaying, a first quantity of acting signals are received and the value of first quantity is stored into the counter.

Refer to FIG. 3, the time periods of the acting signal timeline 91 and the displaying timeline 92 are equally divided into a plurality of time units, wherein four of the time units are selected for demonstration. The mark pointer is located at the first mark of the movie clip 7, A second quantity can be calculated from the value stored in the counter based on 1:1 ratio (or other ratios), such as, when the value of the counter is 3, using the calculating ratio 1:1 between the value of the counter and the second quantity, the calculated second quantity will be 3 in the first time unit. However, it is intended that the descriptions and examples in the specification to be considered as exemplary only, the true scope and spirit of the invention do not limit the calculating ratio to just one type, other ratios also can be utilized to achieve the similar results.

From the above preferred example, if the calculated second quantity is 3 in the first time unit, the mark pointer will move from the current position (mark 931) toward the ending part of the movie clip 7. During the moving, the corresponding video data of the movie clip in respect to the position of the mark pointer is transmitted to a video displaying device 5 to display, resulting the mark pointer will pass through 3 marks then stop moving when it arrives at the position of mark 934. The timeframe of this segment of the movie clip 7 is equal to the predetermined time unit, thus the video data is displayed in normal speed. The system also receives two acting signals of the acting signal 911 and the acting signal 912 within the same time unit, and the value of the counter is reset to be 2. After the first time unit is ended, the above-mentioned proceeding steps will be repeated in the second time unit, wherein the value of the counter is 2, using the calculating ratio 1:1 between the value of the counter and the second quantity, the calculated second quantity will be 2, the mark pointer will move from the current position (mark 934) toward the ending part of the movie clip 7 and pass through 2 marks to reach the mark 936. From FIG. 3, the actual time required to display this segment of the movie clip 7 is less than the predetermined time unit. Therefore, in order to display this segment of the movie clip 7 concurring with the timeframe of the, slow speed of displaying is needed. The same rule is applied to display the rest of the movie clip 7. If the mark pointer arrives at the ending part of the movie clip 7, the mark pointer would be relocated at the first mark (which is the mark 931) of the movie clip 7. The audio data producing unit 2 produces and transmits the audio data 21 to the audio player 6 for delivering through the transmission path 83 and transmission path 83a. The functions of the audio data producing unit 2 can be replaced by combining the control device 3 and the data storage device 4 in such that the control device 3 retrieves the audio data 41 prerecorded in the data storage device 4 and transmits it to the audio player 6 for delivering through the transmission path 83a when the mark pointer arrives at each mark.

Refer to FIG. 1 and FIG. 4, wherein FIG. 4 is a schematic diagram demonstrating an interactive audio-video displaying method in accordance with another preferred embodiment of the present invention. FIG. 4 is similar to FIG. 3. At first, a movie clip 7 with a plurality of movie segments is produced, wherein every movie segment comprises a plurality of marks and is corresponding with various exercising frequencies, and those movie segments all have the same displaying timeframe a counter and a ratio are set, and a predetermined time unit equaled to the displaying timeframe of those segments of movie clip is retrieved. The following steps are operated within every predetermined time unit, such as: a second quantity is calculated from the value stored in the counter according to the predetermined ratio and the movie segment with corresponding exercising frequency is selected by using the second quantity; the video data of such segment of movie clip is retrieved and is transmitted to the video displaying device 5 through the transmission path 82 to display in normal speed; during the displaying, a first quantity of acting signals are received and the value of first quantity is stored into the counter.

Refer to FIG. 4, the time periods of the acting signal timeline 91, the displaying timeline 92 and the movie clip timeline 93 are equally divided into a plurality of time units, wherein four of the time units are selected for demonstration. The mark pointer is located at the first mark of the movie clip 7, A second quantity can be calculated from the value stored in the counter based on 1:1 ratio (or other ratios), such as, when the value of the counter is 0, using the calculating ratio 1:1 between the value of the counter and the second quantity, the calculated second quantity will be 0 in the first time unit, therefore, it indicates that there is no movie segment with corresponding exercising frequency, as a result, no video data is displayed. The system also receives two acting signals of the acting signal 911 and the acting signal 912 within the same time unit, and the value of the counter is reset to be 2. After the first time unit is ended, the above-mentioned proceeding steps will be repeated in the second time unit, wherein the value of the counter is 2, using the calculating ratio 1:1 between the value of the counter and the second quantity, the calculated second quantity will be 2. Such second quantity is then utilized to search the movie segments with corresponding exercising frequencies. According to this preferred example of the present invention, the second quantity 2 will determine the video data between the mark 931 and the mark 933 (with 2 intervals) to be selected and retrieved. The video data is then displayed in normal speed within the second time unit. Simultaneously, the system will receive 3 acting signals, and the above-illustrated proceeding steps will be repeated to continue the process. The audio data producing unit 2 produces and transmits the audio data 21 to the audio player 6 for delivering through the transmission path 83 and transmission path 83a. The functions of the audio data producing unit 2 can be replaced by combining the control device 3 and the data storage device 4 in such that the control device 3 retrieves the audio data 41 prerecorded in the data storage device 4 and transmits it to the audio player 6 for delivering through the transmission path 83a when the mark pointer arrives at each mark.

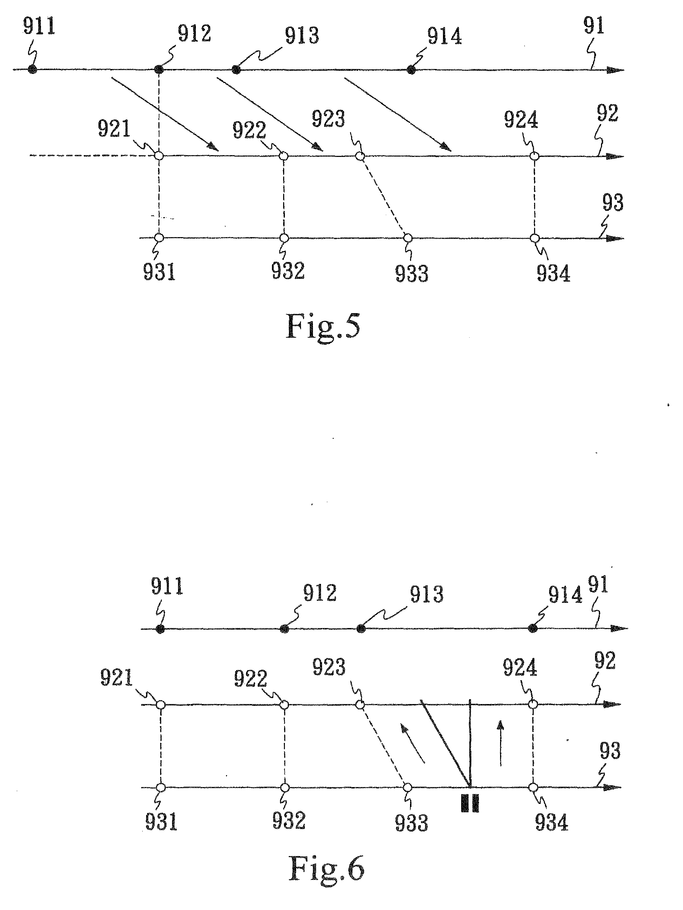

Refer to FIGS. 1 & 5, wherein FIG. 5 is a schematic diagram demonstrating an interactive audio-video displaying method in accordance with another preferred embodiment of the present invention. At first, the movie clip 7 with a plurality of marks is produced, a mark pointer is set at one of the marks located on the movie clip 7, Tthe first mark (mark 931) on the movie clip 7 is chosen in this preferred example. When the system receives an acting signal (acting signal 911), a time interval counter is set, and the following proceeding steps are operated in the same time: receiving an acting signal (acting signal 912), calculating a time interval between such acting signal and previous acting signal (acting signal 911), storing the calculated time interval in the time interval counter, retrieving the value of time interval from the time interval counter, then the mark pointer will move from the current position toward the ending part of the movie clip 7 until the mark pointer arrives at the next mark (mark 932) then it stops. Simultaneously, video data of the corresponding movie clip 7 indicated by the mark pointer is transmitted to the video displaying device 5 through the transmission path 82 to display either normally, or fast-forwardly, or slowly in such that the displaying will be totally performed exactly within the time interval and the above-illustrated proceeding steps will be repeated to continue the process.

Refer to FIG. 5, when the system starts to operate, the time interval between the acting signal 911 and the acting signal 912 is equal to the video time interval between the mark 931 and the mark 932, so that the displaying can be performed in normal speed. Similarly, the rest of the movie clip 7 is displayed according to the above-mentioned proceeding steps. When the acting signal 913 is produced, the system calculates the time interval between the acting signal 912 and the acting signal 913, and the video data between the mark 932 and the mark 933 on the movie clip timeline 93 is displayed within such calculated time interval. From the drawings, it is clear that the displaying time interval between the displaying mark 922 and the displaying mark 923 on the displaying timeline 92 is shorter than the video time interval between the mark 932 and the mark 933. Thus, the video data is displayed fast-forwardly. When the acting signal 914 is produced, the system calculates the time interval between the acting signal 913 and the acting signal 914, and the video data between the mark 933 and the mark 934 on the movie clip timeline 93 is displayed within such calculated time interval. From the drawings, it is clear that the displaying time interval between the displaying mark 923 and the displaying mark 924 of the displaying timeline 92 is longer than the video time interval between the mark 933 and the mark 934. Thus, the video data is displayed slowly. If the mark pointer arrives at the ending part of the movie clip 7, the mark pointer would be relocated at the first mark (which is the mark 931) of the movie clip 7. The audio data producing unit 2 produces and transmits the audio data 21 to the audio player 6 for delivering through the transmission path 83 and transmission path 83a. The functions of the audio data producing unit 2 can be replaced by combining the control device 3 and the data storage device 4 in such that the control device 3 retrieves the audio data 41 prerecorded in the data storage device 4 and transmits it to the audio player 6 for delivering through the transmission path 83a when the mark pointer arrives at each mark. An audio-video data synthesizing device 10 for synthesizing the video data transmitted to the video displaying device 5 and the audio data transmitted to the audio player 6, then exporting the synthesized data to become a new movie clip.

Refer to FIGS. 1 & 6, wherein FIG. 6 is a schematic diagram demonstrating an interactive audio-video displaying method in accordance with another preferred embodiment of the present invention. At first, the movie clip 7 with a plurality of marks is produced, a mark pointer is set at one of the marks located on the movie clip 7, Tthe first mark (mark 931) on the movie clip 7 is chosen in this preferred example. When the system receives a plurality of acting signals (which are the acting signal 911 to 914), a acting signal time code record (i.e. the displaying timeline 92) is produced, and the following proceeding steps are operated in the same time: calculating a time interval between each acting signal and its preceding acting signal, the mark pointer will move from the current position toward the ending part of the movie clip 7 until the mark pointer arrives at the next mark (mark 932) then it stops. Simultaneously, video data of the corresponding movie clip 7 indicated by the mark pointer is transmitted to the video displaying device 5 through the transmission path 82 t o display either through the function of normal speed, or fast forward, or normal speed to the midpoint then pause then normal speed in respect to the position of the mark pointer in such that the displaying will be totally performed exactly within the time interval and the above-illustrated proceeding steps will be repeated to continue the process.

Refer to FIG. 6, the displaying method between mark 931 and mark 933 on the movie clip timeline 93 is the same as the displaying method illustrated in FIG. 5, but the displaying method between mark 933 and mark 934 is different. Thus, the movie clip is first displayed in normal speed, then the displaying pauses when it proceeds to the midpoint (i.e. the half way) between the mark 933 and the mark 934, after the time difference between the displaying time interval from displaying mark 923 to displaying mark 924 on the displaying timeline 92 and the displaying video time interval from mark 933 to mark 934 is passing, the video will continue to be displayed from the midpoint to mark 934 in normal speed again. If the mark pointer arrives at the ending part of the movie clip 7, the mark pointer would be relocated at the first mark (which is the mark 931) of the movie clip 7. The audio data producing unit 2 produces and transmits the audio data 21 to the audio player 6 for delivering through the transmission path 83 and transmission path 83a. The functions of the audio data producing unit 2 can be replaced by combining the control device 3 and the data storage device 4 in such that the control device 3 retrieves the audio data 41 prerecorded in the data storage device 4 and transmits it to the audio player 6 for delivering through the transmission path 83a when the mark pointer arrives at each mark. An audio-video data synthesizing device 10 for synthesizing the video data transmitted to the video displaying device 5 and the audio data transmitted to the audio player 6, then exporting the synthesized data to become a new movie clip.

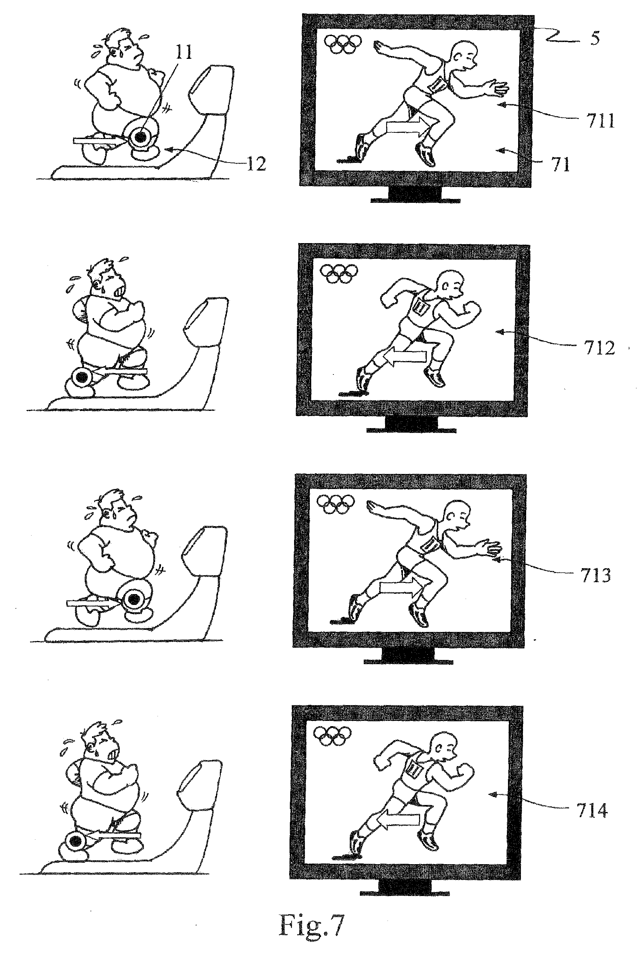

FIG. 7 is a schematic diagram d emonstrating a method of an interactive audio-video displaying system in accordance with another preferred embodiment of the present invention. Refer to FIGS. 1, 3, and 4, this preferred embodiment illustrates a user simulating an Olympic runner running style. The user equips a detecting device 11 onto his right foot 12 (or left foot), and the detecting device 11 detects all the linear movement (back and forth) of the right foot 12, then the acting signals are produced to control the displaying of the movie clip in the video displaying device 5. The movie clip 71 of Olympic athlete running together with the sound effect of the foot touching the ground is prerecorded in the data storage device 4, and the audio data producing unit 2 is accomplished by the integration of the control device 3 and the data storage device 4. This embodiment is operated in accordance with the method of utilizing the acting signals to control the movie clips disclosed in FIG. 3. The method comprises: preprocessing a movie clip 71 of the Olympic athlete running; setting a mark at a point to indicate that either one of the feet of the Olympic athlete touches the ground. Four marks are selected at the beginning part of the movie clip 71 to demonstrate the method sequentially from the movie clip mark 711 to 714. The system calculates the number of received acting signals in each time unit to determine which number of the marks is to be passed in the next time unit, and the corresponding video data is transmitted to the video displaying device 5 through the transmission path 82 to display either normally, or fast-forwardly, or slowly. From the above-mentioned steps, the whole movie clip can be displayed in order. At the same time, the prerecorded sound effect of the runner's feet touching the ground in the movie clip 71 is delivered.

This preferred embodiment can be also operated in accordance with the method illustrated in FIG. 4 which discloses how the acting signals control the movie clip. The method comprises: preprocessing a movie clip 71 of the Olympic athlete running, so that a plurality of movie segments are in the movie clip 71, wherein different movie segments are corresponding to different moving frequencies of the runner's feet. A plurality of marks are set on each point when the runner's foot touches the ground in each segment of the movie clip so that the segment with dense marks can represent the part of the movie clip comprising the fast moving frequency of the athlete's feet, vice versa, where the segment with spare marks indicates the slow moving frequency of the athlete's feet in the movie clip. The system calculates the number of received acting signals in each time unit to select the movie segment with the number of marks that is closest to the calculated number of the acting signals, and displays it in normal speed within the next time unit and the video data is transmitted to the video displaying device 5 through the transmission path 82 to display. At the same time, the prerecorded sound effect of the runner's feet touching the ground in the movie clip 71 is delivered. In this way, the goal for the user to control Olympic athlete running in movie clip 71 is achieved.

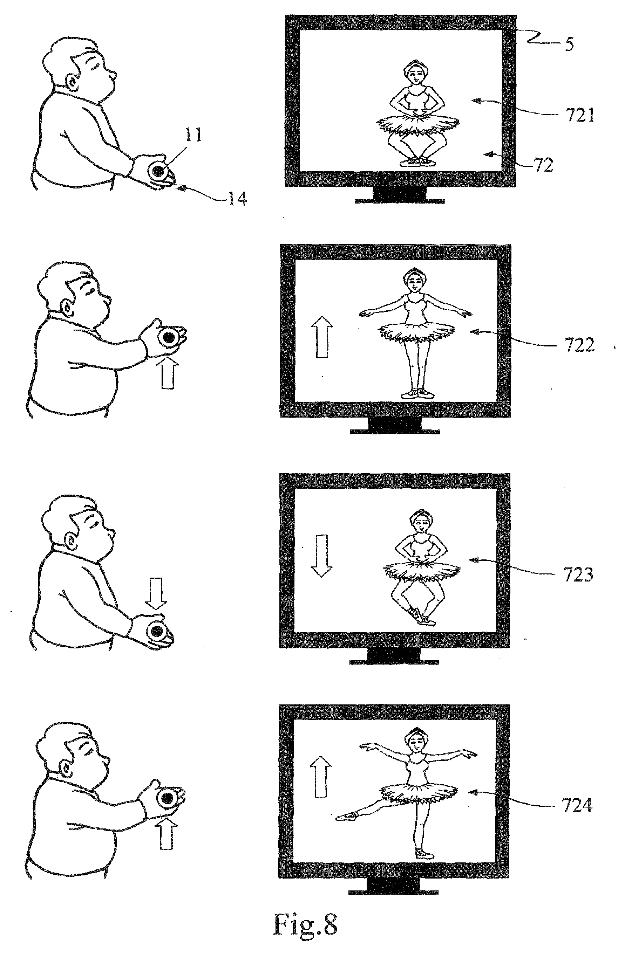

FIG. 8 is a schematic diagram demonstrating the method of an interactive audio-video displaying system in accordance with another preferred embodiment of the present invention. Refer to FIGS. 1 and 2, this embodiment illustrates the method of a user directly controlling the upward and downward movement of an actor in the movie clip. The user equips a detecting device 11 onto his right hand 14 (or left hand), the up-and-down movements of the right hand 14 of the user resulting in changes of the perpendicular exercising direction, the detecting device 11 detects the changes and produces acting signals to control the displaying of the movie clip in the video displaying device 5. This embodiment is operated in accordance with the method of utilizing the acting signals to control the movie clips disclosed in FIG. 2. A plurality of marks are set on the movie clip 72 every time when the ballet dancer stands up and squats in the movie clip. In this embodiment, four marks at the beginning part of the movie clip 72 are selected to illustrate the operation, movie clip mark 721 to movie clip mark 724 are corresponding to the mark 931 to the mark 934 on the movie clip timeline 93 of the prerecorded movie clip in FIG. 2 together with the sound effect is prerecorded in the data storage device 4, and the audio data producing unit 2 is accomplished by the integration of the control device 3 and the data storage device 4. The ratio is set to be 1:1, i.e. after receiving an acting signal, the mark pointer will move from the current position toward the ending part of the movie clip 7 and pass through 1 mark. When the system starts to operate, the system waits until the right hand of the user starts to move upwardly, the acting signal is produced and transmitted to the control device 3 through the transmission path 81. The video data between mark 931 and mark 932 on the movie clip timeline 93 is displayed and the displaying is controlled by the acting signal 911. As a matter of fact, the video data between the movie clip mark 721 and movie clip mark 722, in other words, it indicates that the ballet dancer stands up in the movie clip 72, is transmitted to the video displaying device 5 through the transmission path 82 to display. When the right hand of the user moves downwardly, indicating the reversed exercising direction, the acting signal is produced and transmitted to the control device 3 through the transmission path 81. The video data between mark 932 and mark 933 on the movie clip timeline 93 is displayed and the displaying is controlled by the acting signal 912. As a matter of fact, the video data between the movie clip mark 722 and movie clip mark 723, in other words, it indicates that the ballet dancer squats in the movie clip 72, is transmitted to the video displaying device 5 through the transmission path 82 to display. From the above-mentioned steps, the whole movie clip can be displayed in order. Simultaneously, the prerecorded sound effect is delivered when the ballet dander is squatting in the movie clip. The user then can utilize the up-and-down movements of his right hand to control the prerecorded up-and-down movements of the ballet dancer dancing. The images of the ballet dancer dancing in movie clip 72 displayed in accordance with the method disclosed in FIG. 2 and the prerecorded sound effect also can be synthesized and exported to become a new movie clip by the audio-video data synthesizing device 10.

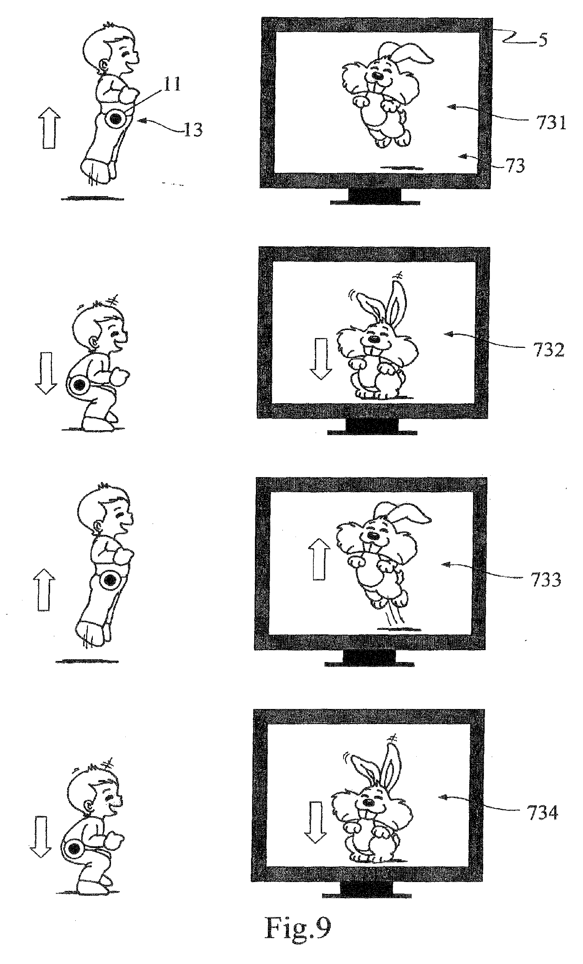

FIG. 9 is a schematic diagram demonstrating the method of an interactive audio-video displaying system in accordance with another preferred embodiment of the present invention. Refer to FIGS. 1 and 5, this embodiment shows how a user can control the movements of a moving object, such as jumping, in the movie clip. First for all, the detecting device 11 is positioned on a user's waist 13 and the jumping movement (up and down) of the user can result in the changes of perpendicular exercising direction. The changes are detected by the detecting device 11 to produce acting signals in order to control the displaying of the cartoon in the video displaying device 5.

This embodiment is operated in accordance with the method of utilizing the acting signals to control the movie clips disclosed in FIG. 5. A plurality of marks are set on a movie clip 73 of a cartoon rabbit jumping whenever the highest jumping point and the lowest dropping point of the rabbit are reached. In this embodiment, four marks at the beginning part of the movie clip 73 are selected to illustrate the operation, movie clip mark 731 to movie clip mark 734 are corresponding to the mark 931 to the mark 934 on the movie clip timeline 93 of the prerecorded movie clip in FIG. 5 together with the sound effect of touching the ground is prerecorded in the data storage device 4, and the audio data producing unit 2 is accomplished by the integration of the control device 3 and the data storage device 4. When the system starts to operate, the system waits until the child starts to jump, the system detects the movement and produces an acting signal 911. When the child jumps to the highest point and starts to drop, indicating the reversed exercising direction, an acting signal 912 is produced. The system calculates the time interval between the acting signal 911 and the acting signal 912, and the video data between the mark 931 and the mark 932 on the movie clip timeline 93 is displayed within such calculated time interval. As a matter of fact, the video data between the movie clip mark 731 and movie clip mark 732, in other words, it indicates that the cartoon rabbit drops from the highest point to the lowest point in the movie clip 73, is transmitted to the video displaying device 5 through the transmission path 82 to display. From the above-mentioned steps, the whole movie clip can be displayed in order. When the displaying arrives at the movie clip mark 732 and mark 734, the prerecorded sound effect of stamping is delivered. In this way, the goal for the child to control the images of rabbit jumping in movie clip 73 is achieved. The images of rabbit jumping in movie clip 73 displayed in accordance with the method disclosed in FIG. 5 and the prerecorded sound effect of stamping also can be synthesized and exported to become a new movie clip by the audio-video data synthesizing device 10.

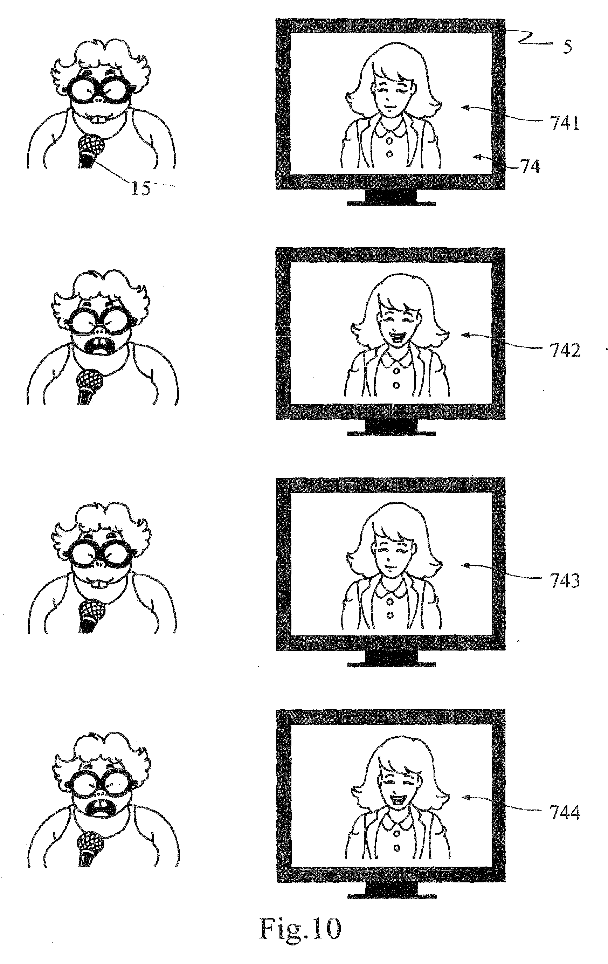

FIG. 10 is a schematic diagram demonstrating the method of an interactive audio-video displaying system in accordance with another preferred embodiment of the present invention. Refer to FIGS. 1, 2 and 6, this preferred embodiment is about how the user's sound and speech can control the speaking image of an actor in the video displaying device 5, and the user's sound and speech can be delivered simultaneously. This preferred embodiment can be applied to the live service on line in remote distance by a serviceman or to produce the illustrating movie clips. The main difference between this embodiment and the above-mentioned preferred embodiments is that the audio data producing unit 2 is no longer replaced by the integration of the functions of the control device 3 and the data storage device 4. The audio data producing unit 2 is accomplished by the user's sound and speech, and the user's sound and speech are transmitted through the transmission path 83 and transmission path 83a to the audio player 6 for delivering. The acting signal producing unit 1 is replaced by the audio data producing unit 2, and the transmission path 81 is replaced by the transmission path 83, when the microphone 15 receives each sound signal pronounced by the user and then the sound signal is transmitted through the transmission path 83 to the control device 3, an acting signal is produced to control the displaying of the movie clip in the video displaying device 5. This embodiment is operated in accordance with the method of utilizing the acting signals to control the movie clips disclosed in FIG. 2. At first, a movie clip 74 of the spokesman speaking is stored in the data storage device 4, wherein the mouth opening point and the mouth closing point of the spokesman are determined, and a plurality of marks are set at those points in the movie clip 74. In this embodiment, four marks at the beginning part of the movie clip 74 are selected to illustrate the operation, movie clip mark 741 to movie clip mark 744 are corresponding to the mark 931 to the mark 934 on the movie clip timeline 93 of the prerecorded movie clip in FIG. 2. Set a ratio between the number of received acting signals and the first quantity of marks which the mark pointer will pass through. The ratio is set to be 1:2 in this preferred example, i.e. when the control device 3 receives each acting signal, the mark pointer will move from the current position toward the ending part of the movie clip 7 and pass through 2 marks (other ratios can also be utilized). When the system starts to operate, the user pronounces a sound and the sound signal is transmitted through the transmission path 83 to the control device 3, an acting signal 91 is produced to control the displaying of the video data from mark 931 to mark 933 on the movie clip timeline 93, i.e. the video data between the movie clip mark 741 and movie clip mark 743 of the spokesman movie clip stored in the data storage device 4, in other words, it indicates that from the spokesman closing the mouth to opening the mouth and then to closing the mouth in the movie clip 74, is transmitted to the video displaying device 5 through the transmission path 82 to display. From the above-mentioned steps, the whole movie clip can be displayed in order. The user's sound and speech will result in audio data 21 and the audio data 21 is transmitted through the transmission path 83 and transmission path 83a to the audio player 6 for delivering. In this way, the goal for the user to control the images of spokesman speaking in movie clip 74 is achieved.

In this preferred embodiment, in order to avoid the huge data storage space that could occupy too much bandwidth for transmitting video data resulting in the delayed effect on the display of the video, the transmission path 83 is utilizing the internet to transmit the data, the transmission path 82 and the transmission path 83a use wire transmission, and the audio data 21 is transmitted through the internet. The video data is prevented to be transmitted through the internet in order to ensure a smooth displaying. But the control device 3 and the data storage device 4 can be installed at the near end of the user for the purpose of convenience. The transmission path 82 and the transmission path 83a both use internet transmission, and the transmission path 83 uses wire transmission in such that only a video displaying device 5, audio player 6 and the connection to the internet are required to be installed at a far end for transmission.

The near end user can be a computer so that the computer can simultaneously transmit an acting signal and an audio data 21 to the far end in order to control the speech effect of the actor or the spokesman in the movie clip at the far end of the system. The computer can also read the speaking or singing sound track and deliver the sound signals. Every sound signal results in an acting signal and those signals are transmitted to the far end at the same time. The computer can also read a word text file and produce the pronunciation of each word utilizing its specific software. The sound signals of every pronunciation and their resulting acting signals are transmitted to the far end. The computer can also receive the image signals of the moving object transmitted from the video camera, through analyzing, the acting signals are produced according to the received image signals of the moving object.

This preferred embodiment can be also operated in accordance with the method illustrated in FIG. 6 which discloses how the acting signals control the movie clip. At first, a movie clip of the spokesman speaking is stored in the data storage device 4, wherein the pronouncing points of the spokesman are determined, and a plurality of marks are set at those points in the movie clip 74. The speaking or singing sound track of the user are prerecorded simultaneously. The system calculates the time interval between the acting signal 911 and the acting signal 912, and the video data between the mark 931 and the mark 932 on the movie clip timeline 93 is displayed either through the function of normal speed, or fast forward, or normal speed to the midpoint then pause then normal speed within such calculated time interval. The video data is transmitted to the video displaying device 5 through the transmission path 82 to display. From the above-mentioned steps, the whole movie clip can be displayed in order. The audio data producing unit 2 is accomplished by user's sound and speech. The prerecorded speaking or singing sound track of the user is retrieved and generated to be audio data 21, and the audio data 21 is transmitted through the transmission path 83 and transmission path 83a to the audio player 6 for delivering. In this way, the goal for the sound signal pronounced by the user to control the images of spokesman speaking in movie clip 74 is achieved. The ways for the user to prerecord the sound track comprise: a wire connection, or a wireless connection or an internet transmission. The images of the spokesman speaking displayed in accordance with the method disclosed in FIG. 2 or FIG. 6 and the audio data 21 of speaking or singing by the user also can be synthesized and exported to become a new movie clip by the audio-video data synthesizing device 10.

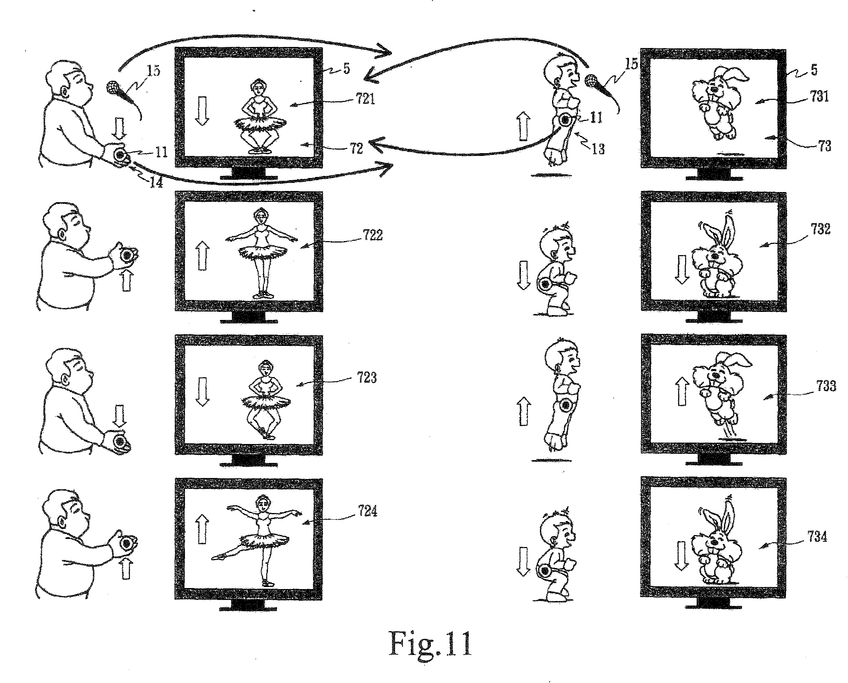

FIG. 11 is a schematic diagram demonstrating the method of an interactive audio-video displaying system in accordance with another preferred embodiment of the present invention. Refer to FIGS. 8 and 9, this preferred embodiment shows how two users can control the movements of actors in the movie clips through the on-line (internet) interaction. The acting signals produced by one user can control the displaying of movie clip in near end, the exercising frequency of acting signals can also be demonstrated on the video displaying device 5 of another user that is located in remote distance via internet transmission, or the acting signals can control the displaying of movie clip in the video displaying device 5 of another user. The audio data producing unit 2 is accomplished by the integration of the control device 3 and the data storage device 4 in near end; or is accomplished by the user's sound and speech in remote location, and the audio data is transmitted through the transmission path 83 (via internet transmission) and transmission path 83a to the audio player 6 for delivering. In this way, the goals for two users to control the movement of actors in the movie clips through on-line interaction and have the mutual conversation are achieved.

The present invention provides an interactive displaying system and method that can utilize the user's sound, body movements or the computer to generate acting signals for controlling the display of the movie clips incorporated with the sound effect to increase the reality of the image display.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An interactive audio-video displaying method, **characterized in that**:
(a) producing a movie clip with a plurality of marks;
(b) setting a mark pointer on one of the marks located on the movie clip;
(c) receiving an acting signal;
(d) moving the mark pointer from a current position towards an ending part of the movie clip, and transmitting corresponding video data of the movie clip in respect to the position of the mark pointer to a video displaying device to display during the moving, and when the mark pointer is moved through a first quantity of marks, and reach end of the first quantity of marks, the mark pointer is stopped and the step (c) is repeated, wherein when the acting signal is received during the moving in the step (d), the mark pointer is moved to next mark and the step (d) is repeated.

2. A method as claimed in Claim 1, further **characterized in that**:
the first quantity of marks is a positive integer;
relocating the mark pointer to the first mark of the movie clip when the mark pointer arrives the ending part of the movie clip, and the method continues to proceed;
retrieving an audio data when the mark pointer reaches one of the marks, and
transmitting the audio data to an audio player for delivering; and
equipping a detecting device onto an user, when the user starts to move, the detecting device detects starting point of the movement and detects turning point of the changing movement direction of the user, and in response of the detection, the acting signals are produced.

3. A method as claimed in Claim 1, further **characterized in that**:
a video displaying device for displaying video data;
a data storage device having at least one movie clip comprising a plurality of marks;
an acting signal producing unit for producing and transmitting the acting signals; a control device for moving a mark pointer according to the acting signal produced by the acting signal producing unit, the corresponding video data of the movie clip in respect to the position of the mark pointer is transmitted to the video displaying device to display.
an audio player and an audio data producing unit, the audio data producing unit produces an audio data and transmits it to the audio player for delivering; and
the acting signal producing unit is replaced by the audio data producing unit, wherein every audio data results in an acting signal;
an audio-video data synthesizing device for synthesizing the video data transmitted to the video displaying device and the audio data transmitted to the audio player, then exporting the synthesized data to become a new movie clip.

4. A method as claimed in Claim 3, further **characterized in that**:
at least one sound effect is prerecorded and stored in the data storage device, and the control device retrieves at least one sound effect that is prerecorded and stored in the data storage device in order to replace the audio data producing unit.

5. A method as claimed in Claim 3, further **characterized in that**:
the audio data producing unit is an user or an external electric device.

6. A method as claimed in Claim 3, further **characterized in that**:
the acting signal producing unit further comprises a detecting device for detecting any variation of a movement direction of a moving object, when the detecting device detects a starting point of the movement and a turning point of the changing movement direction of the moving object, an acting signal is produced;
the detecting device further comprises a functional key, when the functional key is triggered, the mark pointer is moved to a next mark of the movie clip;
the acting signal producing unit produces the acting signal according to a predetermined program;
the acting signal producing unit utilizes a microphone to receive a sound signal, wherein the sound signal results in an acting signal;
the acting signal producing unit delivers a sound signal, wherein the sound signal results in an acting signal; and
the acting signal producing unit utilizes a video camera to receive image signals of a moving body by recording movements of the moving body, and
through analyzing, the acting signals are produced according to the retrieved image signals.

7. A method as claimed in Claim 3, further **characterized in that**:
the video displaying device is selected from the group consisting of a computer monitor, a television, and a portable electric device with a monitor.

8. A method as claimed in Claim 3, further **characterized in that**:
the acting signal producing unit, the audio data producing unit, the control device, the data storage device, the audio player, the video displaying device and the audio-video data synthesizing device communicate via a wire, wireless,
network, or internet connection.

9. An interactive audio-video displaying method, **characterized in that**:
(a) producing a movie clip with a plurality of marks thereon;
(b) setting a mark pointer on one of the marks located on the movie clip, setting a counter, and repeating following step;
(c) calculating a second quantity according to the value stored in the counter, retrieving a predetermined time unit, and proceeding the following steps within the predetermined time unit:
(c1) moving the mark pointer from a current position towards an ending part of the movie clip, the mark pointer will stop moving whenever passing through the second quantity of marks, transmitting corresponding video data of the movie clip in respect to the position of the mark pointer to a video displaying device to display either normally, or fast-forwardly, or slowly in such that the display will be performed exactly within the predetermined time unit; and
(c2) receiving a first quantity of acting signals, and saving value of such first quantity in the counter.

10. A method as claimed in Claim 9, **characterized in that**:
the step (b) further comprises of setting a zero value in the counter;
relocating the mark pointer to the first mark of the movie clip when the mark pointer arrives the ending part of the movie clip, and the method continues to proceed;
retrieving an audio data when the mark pointer reaches one of the marks, and transmitting the audio data to an audio player for delivering; and
equipping a detecting device onto an user, when the user starts to move, the detecting device detects starting point of the movement and detects turning point of the changing movement direction of the user, and in response of the detection, the acting signals are produced.

11. A method as claimed in Claim 9, **characterized in that**:
a video displaying device for displaying video data;
a data storage device having at least one movie clip comprising a plurality of marks;
an acting signal producing unit for producing and transmitting the acting signals; a control device for moving a mark pointer according to the acting signal produced by the acting signal producing unit, the corresponding video data of the movie clip in respect to the position of the mark pointer is transmitted to the video displaying device to display.
an audio player and an audio data producing unit, the audio data producing unit produces an audio data and transmits it to the audio player for delivering; and
the acting signal producing unit is replaced by the audio data producing unit, wherein every audio data results in an acting signal;
an audio-video data synthesizing device for synthesizing the video data transmitted to the video displaying device and the audio data transmitted to the audio player, then exporting the synthesized data to become a new movie clip.
at least one sound effect is prerecorded and stored in the data storage device, and the control device retrieves at least one sound effect that is prerecorded and stored in the data storage device in order to replace the audio data producing unit.
the audio data producing unit is an user or an external electric device.
the acting signal producing unit further comprises a detecting device for detecting any variation of a movement direction of a moving object, when the detecting device detects a starting point of the movement and a turning point of the changing movement direction of the moving object, an acting signal is produced;
the detecting device further comprises a functional key, when the functional key is triggered, the mark pointer is moved to a next mark of the movie clip;
the acting signal producing unit produces the acting signal according to a predetermined program;
the acting signal producing unit utilizes a microphone to receive a sound signal, wherein the sound signal results in an acting signal;
the acting signal producing unit delivers a sound signal, wherein the sound signal results in an acting signal; and
the acting signal producing unit utilizes a video camera to receive image signals of a moving body by recording movements of the moving body, and
through analyzing, the acting signals are produced according to the retrieved image signals.
the video displaying device is selected from the group consisting of a computer monitor, a television, and a portable electric device with a monitor.
the acting signal producing unit, the audio data producing unit, the control device, the data storage device, the audio player, the video displaying device and the audio-video data synthesizing device communicate via a wire, wireless, network, or internet connection.

12. An interactive audio-video displaying method, **characterized in that**:
(a) producing a movie clip having a plurality of movie segments, wherein each movie segment comprises a plurality of marks and is corresponding to different exercising frequency, and each of the movie segments has same video time duration;
(b) setting a counter and executing steps (c), (c1), and (c2) repeatedly;
(c) calculating a second quantity according to the value stored in the counter; selecting a movie segment with corresponding exercising frequency in accordance with the second quantity; retrieving a predetermined time unit that is equal to the video time duration of each movie segment, and proceeding the following steps within the predetermined time unit;
(c1) retrieving video data of the movie segment and displaying the video data with normal speed; and
(c2) receiving a first quantity of acting signals, and saving value of such first quantity in the counter.

13. A method as claimed in Claim 12, **characterized in that**:
the step (b) further comprises of setting a zero value in the counter;
retrieving an audio data when the mark pointer reaches one of the marks, and
transmitting the audio data to an audio player for delivering; and
equipping a detecting device onto an user, when the user starts to move, the detecting device detects starting point of the movement and detects turning point of the changing movement direction of the user, and in response of the detection, the acting signals are produced.

14. A method as claimed in Claim 12, **characterized in that**:
a video displaying device for displaying video data;
a data storage device having at least one movie clip comprising a plurality of marks;
an acting signal producing unit for producing and transmitting the acting signals; a control device for moving a mark pointer according to the acting signal produced by the acting signal producing unit, the corresponding video data of the movie clip in respect to the position of the mark pointer is transmitted to the video displaying device to display.
an audio player and an audio data producing unit, the audio data producing unit produces an audio data and transmits it to the audio player for delivering; and
the acting signal producing unit is replaced by the audio data producing unit, wherein every audio data results in an acting signal;
an audio-video data synthesizing device for synthesizing the video data transmitted to the video displaying device and the audio data transmitted to the audio player, then exporting the synthesized data to become a new movie clip.
at least one sound effect is prerecorded and stored in the data storage device, and the control device retrieves at least one sound effect that is prerecorded and stored in the data storage device in order to replace the audio data producing unit.
the audio data producing unit is an user or an external electric device.
the acting signal producing unit further comprises a detecting device for detecting any variation of a movement direction of a moving object, when the
detecting device detects a starting point of the movement and a turning point of the changing movement direction of the moving object, an acting signal is produced;
the detecting device further comprises a functional key, when the functional key is triggered, the mark pointer is moved to a next mark of the movie clip;
the acting signal producing unit produces the acting signal according to a predetermined program;
the acting signal producing unit utilizes a microphone to receive a sound signal, wherein the sound signal results in an acting signal;
the acting signal producing unit delivers a sound signal, wherein the sound signal results in an acting signal; and
the acting signal producing unit utilizes a video camera to receive image signals of a moving body by recording movements of the moving body, and
through analyzing, the acting signals are produced according to the retrieved image signals.
the video displaying device is selected from the group consisting of a computer monitor, a television, and a portable electric device with a monitor.
the acting signal producing unit, the audio data producing unit, the control device, the data storage device, the audio player, the video displaying device and the audio-video data synthesizing device communicate via a wire, wireless, network, or internet connection.

15. An interactive audio-video displaying method, **characterized in that**:
(a) producing a movie clip with a plurality of marks thereon;
(b) setting a mark pointer on one of the marks located on the movie clip, receiving an acting signal, setting a time interval counter; and repeating following steps;
(c) calculating time interval between the acting signal and previous acting signal, and storing the time interval in the time interval counter; and
(d) retrieving the time interval from the time interval counter, moving the mark pointer from a current position towards an ending part of the movie clip, wherein when the mark pointer reaches the next mark, it will stop, and transmitting corresponding video data of the movie clip in respect to the position of the mark pointer to a video displaying device to display either normally, or fast-forwardly, or slowly in such that the display will be performed exactly within the time interval.

16. A method as claimed in Claim 15, **characterized in that**:
relocating the mark pointer to the first mark of the movie clip when the mark pointer arrives the ending part of the movie clip, and the method continues to proceed;
retrieving an audio data when the mark pointer reaches one of the marks, and transmitting the audio data to an audio player for delivering; and
equipping a detecting device onto an user, when the user starts to move, the detecting device detects starting point of the movement and detects turning point of the changing movement direction of the user, and in response of the detection, the acting signals are produced.

17. A method as claimed in Claim. 15, **characterized in that**:
a video displaying device for displaying video data;
a data storage device having at least one movie clip comprising a plurality of marks;
an acting signal producing unit for producing and transmitting the acting signals; a control device for moving a mark pointer according to the acting signal produced by the acting signal producing unit, the corresponding video data of the movie clip in respect to the position of the mark pointer is transmitted to the video displaying device to display.
an audio player and an audio data producing unit, the audio data producing unit produces an audio data and transmits it to the audio player for delivering; and
the acting signal producing unit is replaced by the audio data producing unit, wherein every audio data results in an acting signal;
an audio-video data synthesizing device for synthesizing the video data transmitted to the video displaying device and the audio data transmitted to the audio player, then exporting the synthesized data to become a new movie clip.
at least one sound effect is prerecorded and stored in the data storage device, and the control device retrieves at least one sound effect that is prerecorded and stored in the data storage device in order to replace the audio data producing unit.
the audio data producing unit is an user or an external electric device.
the acting signal producing unit further comprises a detecting device for detecting any variation of a movement direction of a moving object, when the detecting device detects a starting point of the movement and a turning point of the changing movement direction of the moving object, an acting signal is produced;
the detecting device further comprises a functional key, when the functional key is triggered, the mark pointer is moved to a next mark of the movie clip;
the acting signal producing unit produces the acting signal according to a predetermined program;
the acting signal producing unit utilizes a microphone to receive a sound signal, wherein the sound signal results in an acting signal;
the acting signal producing unit delivers a sound signal, wherein the sound signal results in an acting signal; and
the acting signal producing unit utilizes a video camera to receive image signals of a moving body by recording movements of the moving body, and through analyzing, the acting signals are produced according to the retrieved image signals.
the video displaying device is selected from the group consisting of a computer monitor, a television, and a portable electric device with a monitor.
the acting signal producing unit, the audio data producing unit, the control device, the data storage device, the audio player, the video displaying device and the audio-video data synthesizing device communicate via a wire, wireless, network, or internet connection.

18. An interactive audio-video displaying method, **characterized in that**:
(a) producing a movie clip with a plurality of marks thereon;
(b) setting a mark pointer on one of the marks located on the movie clip, receiving a plurality of acting signals, producing an acting signal time code record, and repeating the following steps:
(c) calculating time interval between each acting signal and its preceding acting signal;
(d) moving the mark pointer from a current position towards an ending part of the movie clip, wherein when the mark pointer reaches the next mark, it will stop, and transmitting corresponding video data of the movie clip in respect to the position of the mark pointer to a video displaying device to display either normally, or fast-farwardly, or normally to the midpoint then pause then normally in such that the display will be performed exactly within the time interval.

19. A method as claimed in Claim 18, **characterized in that**:
transmitting corresponding video data of the movie clip in respect to the position of the mark pointer to a video displaying device to display, simultaneously, exporting the prerecorded sound track to an audio player for delivering;
relocating the mark pointer to the first mark of the movie clip when the mark pointer arrives the ending part of the movie clip, and the method continues to proceed;
retrieving an audio data when the mark pointer reaches one of the marks, and transmitting the audio data to an audio player for delivering; and
equipping a detecting device onto an user, when the user starts to move, the detecting device detects starting point of the movement and detects turning point of the changing movement direction of the user, and in response of the detection, the acting signals are produced.

20. A method as claimed in Claim 18, **characterized in that**:
prerecording a sound track by a user, every sound signal results in an acting signal and is recorded in the acting signal time code record;
the user prerecords the sound track via a wire, wireless, network, or internet connection.

21. A method as claimed in Claim 18, **characterized in that**:
a video displaying device for displaying video data;
a data storage device having at least one movie clip comprising a plurality of marks;
an acting signal producing unit for producing and transmitting the acting signals; a control device for moving a mark pointer according to the acting signal produced by the acting signal producing unit, the corresponding video data of the movie clip in respect to the position of the mark pointer is transmitted to the video displaying device to display.
an audio player and an audio data producing unit, the audio data producing unit produces an audio data and transmits it to the audio player for delivering; and
the acting signal producing unit is replaced by the audio data producing unit, wherein every audio data results in an acting signal;
an audio-video data synthesizing device for synthesizing the video data transmitted to the video displaying device and the audio data transmitted to the audio player, then exporting the synthesized data to become a new movie clip.

22. A method as claimed in Claim 21, **characterized in that**:
at least one sound effect is prerecorded and stored in the data storage device, and the control device retrieves at least one sound effect that is prerecorded and stored in the data storage device in order to replace the audio data producing unit.

23. A method as claimed in Claim 21, **characterized in that**:
the audio data producing unit is an user or an external electric device.

24. A method as claimed in Claim 21, **characterized in that**:
the acting signal producing unit further comprises a detecting device for detecting any variation of a movement direction of a moving object, when the detecting device detects a starting point of the movement and a turning point of the changing movement direction of the moving object, an acting signal is produced;
the detecting device further comprises a functional key, when the functional key is triggered, the mark pointer is moved to a next mark of the movie clip;
the acting signal producing unit produces the acting signal according to a predetermined program;
the acting signal producing unit utilizes a microphone to receive a sound signal, wherein the sound signal results in an acting signal;
the acting signal producing unit delivers a sound signal, wherein the sound signal results in an acting signal; and
the acting signal producing unit utilizes a video camera to receive image signals of a moving body by recording movements of the moving body, and
through analyzing, the acting signals are produced according to the retrieved image signals.

25. A method as claimed in Claim 21, **characterized in that**:
the video displaying device is selected from the group consisting of a computer monitor, a television, and a portable electric device with a monitor.

26. A method as claimed in Claim 21, **characterized in that**:
the acting signal producing unit, the audio data producing unit, the control device, the data storage device, the audio player, the video displaying device and
the audio-video data synthesizing device communicate via a wire, wireless, network, or internet connection.
